(19) **Europäisches Patentamt European Patent Office Office européen des brevets**

(11) **EP 3 175 291 B1**

(12) **EUROPEAN PATENT SPECIFICATION**

(45) Date of publication and mention of the grant of the patent:
**17.02.2021 Bulletin 2021/07**

(21) Application number: **14898547.6**

(22) Date of filing: **31.07.2014**

(51) Int Cl.:
*G03B 17/54* (2021.01)     *G03B 15/02* (2021.01)
*G03B 21/10* (2006.01)     *G03B 21/20* (2006.01)
*H04N 5/225* (2006.01)     *H04N 9/31* (2006.01)
*H04N 9/73* (2006.01)

(86) International application number:
**PCT/US2014/049274**

(87) International publication number:
**WO 2016/018406 (04.02.2016 Gazette 2016/05)**

(54) **IMAGE PROJECTION AND CAPTURE WITH ADJUSTMENT FOR WHITE POINT**

BILDPROJEKTION UND -ERFASSUNG MIT EINSTELLUNG FÜR WEISSPUNKT

CAPTURE ET PROJECTION D'IMAGE AVEC AJUSTEMENT DE POINT BLANC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.06.2017 Bulletin 2017/23**

(73) Proprietor: **Hewlett-Packard Development Company, L.P.**
**Spring TX 77389 (US)**

(72) Inventors:
• **MUELLER, Robert L.**
**San Diego, California 92127-1899 (US)**
• **NAYAK, Vijaykumar**
**San Diego, California 92127-1899 (US)**

• **GARCIA-REYERO VINAS, Santiago**
**San Diego, California 92127-1899 (US)**
• **WYNNE, Ben**
**San Diego, California 92127-1899 (US)**

(74) Representative: **Haseltine Lake Kempner LLP**
**Redcliff Quay**
**120 Redcliff Street**
**Bristol BS1 6HU (GB)**

(56) References cited:
**WO-A1-2013/019255     WO-A1-2013/019255**
**WO-A2-2009/074938     GB-A- 2 482 562**
**KR-A- 20080 020 608     US-A1- 2010 097 406**
**US-A1- 2010 328 609     US-A1- 2011 188 002**
**US-A1- 2011 188 002     US-A1- 2012 320 157**
**US-A1- 2013 063 704     US-A1- 2013 300 894**

EP 3 175 291 B1

**Description**

Background

Sharing digital information and collaborating based on that digital information is becoming increasingly common. Input devices capture digital information (e.g., user input on a computing device, digital cameras, scanning devices, etc.). Output devices output digital information for consumption by a user or group of users. Output devices may include digital displays or digital projectors that display digital information onto a display screen or into a workspace.

WO2013/019255 discloses a projection capture system including a workspace camera operatively connected to a controller for capturing still images and video images of an object in a workspace. US2012/0320157 discloses an image projection device in combination with one or more cameras that provide visually flicker-free projection of images or video while image or video capture is occurring. WO2009/074938 discloses a method for illuminating a scene having an average lighting setting.

US20100097406A discloses a light emitting device and GB 2482562A discloses a light control device.

A system for the adjustment of the white point of LEDs of an image projector in a flash mode for image capturing is defined in independent claim 1. A corresponding method is defined in claim 9 and a corresponding computer-readable storage media is defined in claim 11.

Brief Description of the Drawings

Figures 1 A and 1 B are diagrams illustrating perspective exterior views of one example of a projection capture system.

Figure 2 is a diagram illustrating a perspective interior view of one example of a projection capture system.

Figure 3 is a block diagram illustrating the projection capture system shown in Figure 2 according to one example.

Figure 4 is a flow diagram illustrating a simulated annealing method for generating a predetermined white point according to one example.

Figure 5 is a flow diagram illustrating a method for capturing and projecting images according to one example.

Detailed Description

In the following detailed description, reference is made to the accompanying drawings which form a part hereof, and in which is shown by way of illustration specific examples in which the disclosure may be practiced. It is to be understood that other examples may be utilized and structural or logical changes may be made without departing from the scope of the present disclosure. The following detailed description, therefore, is not to be taken in a limiting sense, and the scope of the present disclosure is defined by the appended claims.

One example is directed to a projection capture system that improves the interactive user experience working with real objects and projected objects on a physical work surface. The system is implemented, for example, in stand-alone portable devices deployed on an ordinary work surface. A digital camera, projector and control programming are housed together in a desktop unit that enables a projection augmented virtual reality in which real and projected/virtual objects can be manipulated and shared simultaneously among multiple remote users. Such portable devices can be deployed almost anywhere at any time for interactive collaboration across a comparatively inexpensive platform suitable not only for larger, enterprise business environments but also for small businesses and even personal consumers.

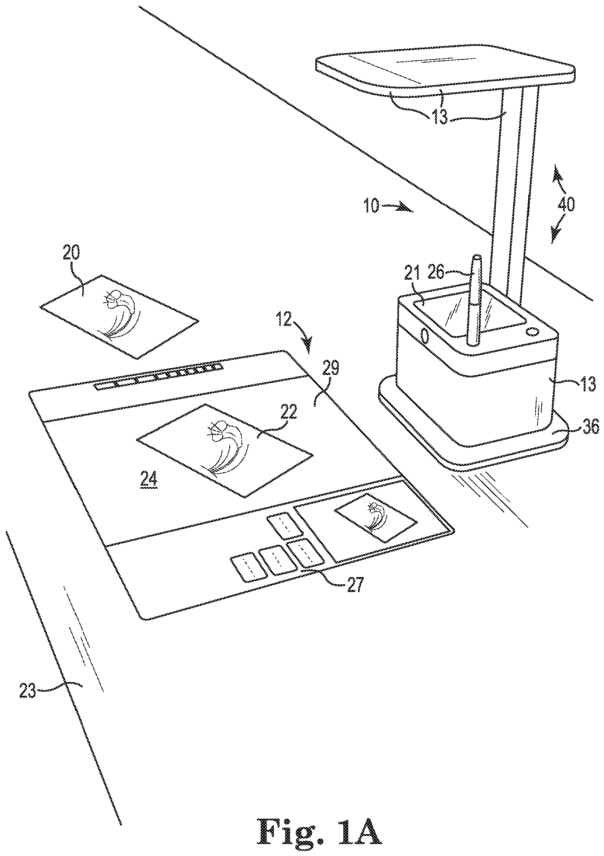

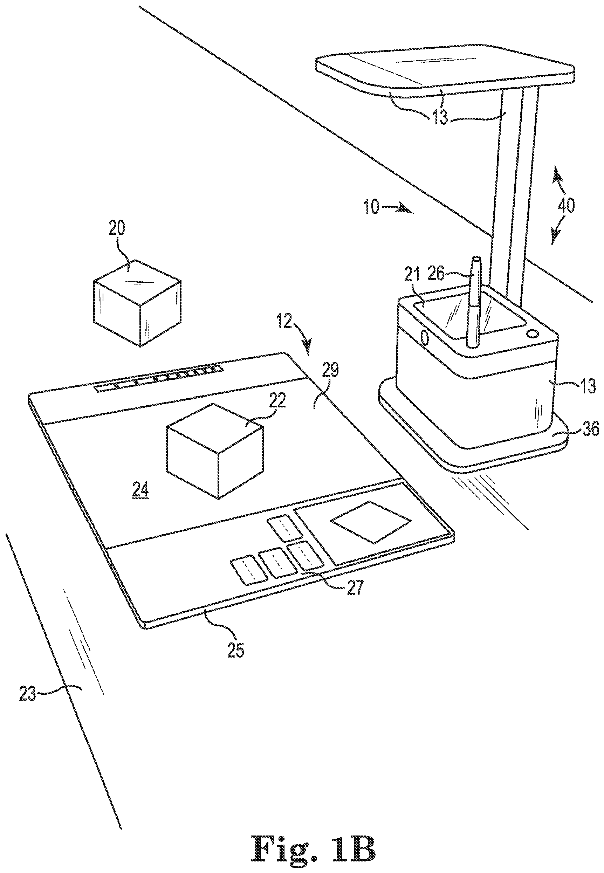

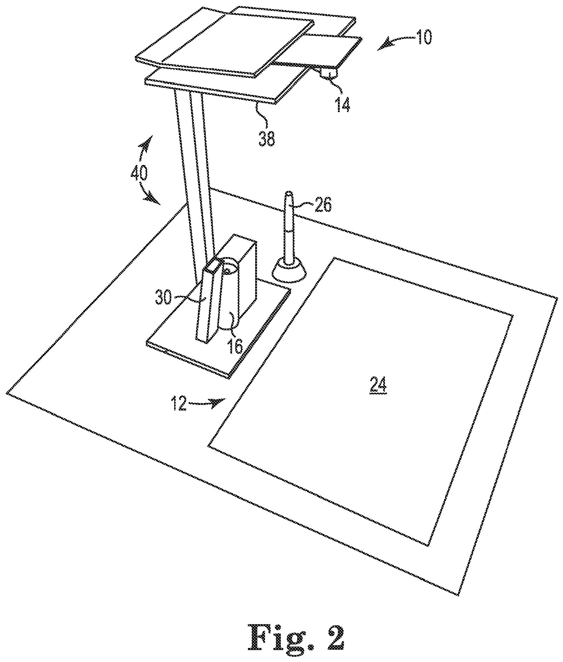

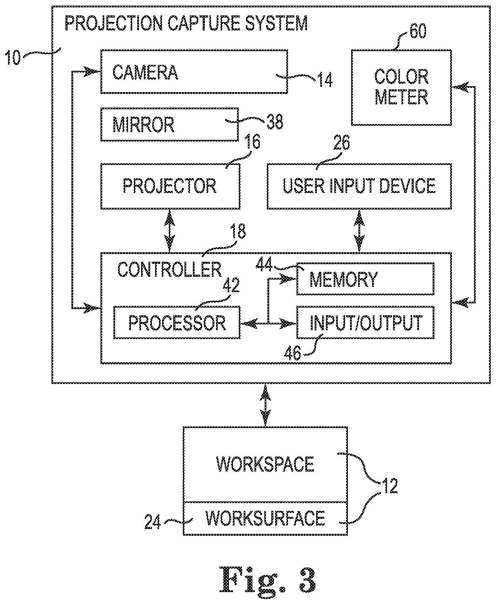

Figures 1A and 1B are diagrams illustrating perspective exterior views of one example of a projection capture system 10 and an interactive workspace 12 associated with system 10. Figure 2 is a diagram illustrating a perspective view of one example of a projection capture system 10 with exterior housing 13 removed. Figure 3 is a block diagram of system 10 shown in Figure 2 according to one example. Referring to Figures 1A, 1B, 2, and 3, projection capture system 10 includes a digital camera 14, a projector 16, and a controller 18. Camera 14 and projector 16 are operatively connected to controller 18 for camera 14 capturing an image of an object 20 in workspace 12 and for projector 16 projecting the object image 22 into workspace 12 and, in some examples, for camera 14 capturing an image of the projected object image 22. The lower part of housing 13 includes a transparent window 21 over projector 16 (and infrared camera 30).

In the example shown in Figure 1A, a two dimensional object 20 (e.g., a hardcopy photograph) placed onto a work surface 24 in workspace 12 has been photographed by camera 14 (Figure 2). Object 20 has then been removed to the side of workspace 12, and object image 22 has been projected onto work surface 24, where it can be photographed by camera 14 and/or otherwise manipulated by a user and re-projected into workspace 12. In the example shown in Figure 1B, a three dimensional object 20 (e.g., a cube) placed onto work surface 24 has been photographed by camera 14. Object 20 has then been removed to the side of workspace 12, and object image 22 has been projected into workspace 12 where it can be photographed by camera 14 and/or otherwise manipulated by a user and re-projected into workspace 12.

In one example implementation of system 10, controller 18 is programmed and projector 16 is to project object image 22 into the same position in workspace 12 as the position of object 20 when its image was captured by camera 14. Thus, a one-to-one scale digital duplicate 22 of an object 20 can be projected over the original allowing a digital duplicate in its place to be manipulated, moved, and otherwise altered as desired by a local user or by multiple remote users collaborating in the same projected workspace 12. The projected image can also be shifted away from the original, allowing a user to work with the original and the duplicate together in the same workspace 12.

System 10 also includes a user input device 26 that allows the user to interact with system 10. A user may interact with object 20 and/or object image 22 in workspace 12 through input device 26. Object image 22 may be transmitted to other workspaces 12 on remote systems 10 (not shown) for collaborative user interaction, and, if desired, object image 22 may be photographed by camera 14 and re-projected into local and/or remote workspaces 12 for further user interaction. In Figure 1A, work surface 24 is part of the desktop or other underlying support structure 23. In Figure 1B, work surface 24 is on a portable mat 25 that may include touch sensitive areas. In Figure 1A, for example, a user control panel 27 is projected on to work surface 24, while in Figure 1B, control panel 27 may be embedded in a touch sensitive area of mat 25. Similarly, an A4, letter or other standard size document placement area 29 may be projected onto work surface 24 in Figure 1A or printed on mat 25 in Figure 1B. Other configurations for work surface 24 are possible. For example, in some applications, system 10 may use an otherwise blank mat 25 to control the color, texture, or other characteristics of work surface 24, and thus control panel 27 and document placement area 29 may be projected on to the blank mat 25 in Figure 1B just as they are projected on to the desktop 23 in Figure 1A.

In one example implementation of system 10, projector 16 serves as the light source for camera 14. A camera capture area and a projector display area overlap on work surface 24. Thus, a substantial operating efficiency can be gained using projector 16 both for projecting images and for camera lighting. The light path from projector 16 through workspace 12 to work surface 24 is positioned with respect to camera 14 to enable user display interaction with minimal shadow occlusion while avoiding specular glare off work surface 24 and objects in workspace 12 that would otherwise blind camera 14.

In one example, the components of system 10 are housed together as a single device 40. Referring to Figure 3, to help implement system 10 as an integrated standalone device 40, controller 18 includes a processor 42, a memory 44, and an input/output 46 housed together in device 40. Input/output 46 allows device 40 to receive information from and send information to an external device. While input/output 46 is shown in Figure 3 as being part of controller 18, some or all of input/output 46 could be separate from controller 18.

For the configuration of controller 18 shown in Figure 3, the system programming to control and coordinate the functions of camera 14 and projector 16 may reside substantially on controller memory 44 for execution by processor 42, thus enabling a standalone device 40 and reducing any special programming of camera 14 and projector 16. Programming for controller 18 may be implemented in any suitable form of processor executable medium including software modules, hardware modules, special-purpose hardware (e.g., application specific hardware, application specific integrated circuits (ASICs), embedded controllers, hardwired circuitry, etc.), or some combination of these. Also, while other configurations are possible, for example where controller 18 is formed in whole or in part using a computer or server remote from camera 14 and projector 16, a compact standalone appliance such as device 40 shown in Figures 1A, 1B and 2 offers the user full functionality in an integrated, compact mobile device 40.

System 10 may also have additional features/functionality. For example, system 10 may also include additional storage (removable and/or non-removable) including, but not limited to, magnetic or optical disks or tape. Computer-readable storage media includes volatile and nonvolatile, removable and non-removable media implemented in any suitable method or technology for non-transitory storage of information such as computer readable instructions, data structures, program modules or other data. Memory 44 is an example of computer-readable storage media (e.g., computer-readable storage media storing computer-executable instructions that when executed by at least one processor cause the at least one processor to perform a method). Computer-readable storage media includes RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium that can be used to store the desired information and that can be accessed by system 10. Any such computer-readable storage media may be part of system 10.

While camera 14 represents generally any suitable digital camera for selectively capturing still and video images in workspace 12, it is expected that a high resolution digital camera will be used in most applications for system 10. A "high resolution" digital camera as used in this document means a camera having a sensor array of at least 12 megapixels.

Lower resolution cameras may be acceptable for some basic scan and copy functions, but resolutions below 12 megapixels currently are not adequate to generate a digital image sufficiently detailed for a full range of manipulative and collaborative functions. Small size, high quality digital cameras with high resolution sensors are now quite common and commercially available from a variety of camera makers. A high resolution sensor paired with the high performance digital signal processing (DSP) chips available in many digital cameras affords sufficiently fast image processing times, for example a click-to-preview time of less than a second, to deliver acceptable performance for most system 10 applications.

The example configuration for system 10 integrated into a standalone device 40 shown in the figures and described above achieves a desirable balance among product size, performance, usability, and cost. The system 10 includes a mirror 38 for producing a folded light path in which light is projected generally upward from projector 16, and reflected generally downward onto work surface 24 by mirror 38. The folded light path for projector 16 reduces the height of device 40 while maintaining an effective placement of the projector high above workspace 12 to prevent specular glare in the capture area of camera 12. The projector's light path shines on a horizontal work surface 24 at a steep angle enabling 3D object image capture. This combination of a longer light path and steep angle minimizes the light fall off across the capture area to maximize the light uniformity for camera flash. In addition, the folded light path enables the placement of projector 16 near base 36 for product stability.

Since projector 16 acts as the light source for camera 14 for still and video capture, the projector light is bright enough to swamp out any ambient light that might cause defects from specular glare. It has been determined that a projector light 200 lumens or greater is sufficiently bright to swamp out ambient light for the typical desktop application for system 10 and device 40. For video capture and real-time video collaboration, projector 16 shines white light into workspace 12 to illuminate object(s) 20. In one example, for a light emitting diode (LED) projector 16, the time sequencing of the red, green, and blue LED's that make up the white light are synchronized with the video frame rate of camera 14. The refresh rate of projector 16 and each LED sub-frame refresh period is an integral number of the camera's exposure time for each captured frame to avoid "rainbow banding" and other unwanted effects in the video image. Also, the camera's video frame rate may be synchronized with the frequency of any ambient fluorescent lighting that typically flickers at twice the AC line frequency (e.g., 120 Hz for a 60 Hz AC power line). An ambient light sensor can be used to sense the ambient light frequency and adjust the video frame rate for camera 14 accordingly.

In another example, the camera 14 and the projector 16 are not synchronized. In one form of this example, a method is used for removing optical beating artifacts from an image or video stream projected by the projector 16. In one form of this example, a camera flash mode is used that replaces the time sequential red, green, blue lighting sequence with a mode that turns each LED on at the same time at a 100% duty cycle, as described in further detail below.

LED projectors typically include three color LED light sources that display light in a red, green, blue time sequential pattern. When using this light source as an illumination system for camera capture or video capture, a rainbow or gray scale beating artifact can be introduced. Typically, the projector displays white light by interleaving red, green and blue light at such a high frequency that the human eye integrates the discrete colors into a uniform white light. Cameras with rolling shutters operating at high frame rates will be able to detect this time sequential R,G,B color sequence. It will be presented as a series of rainbow colored bars in the captured image, even when the projector is projecting white light. To avoid this artifact, the camera's frame rate can be significantly decreased so that each frame exposure includes multiple frames of projected light. However, this may lead to a poor user experience and allow for motion blur artifacts to be introduced into the captured image.

Typically, the red, green and blue LEDs are on for a fixed percentage of time during each displayed frame of content. White light is made by adjusting these percentages (e.g., red is on 40%, blue is on 20% and green is on 40% of the time) for a single frame. This on-off cycle is what creates the artifact in the image capture system. By changing from a time based modulation of the light output to an intensity based modulation in the camera flash mode, the same white color can be achieved, but with each LED on 100% of the time during the camera flash mode. In the camera flash mode, no color is displayed by the projector (i.e., only white light), but the introduction of the color beating artifacts is also eliminated. Furthermore, by displaying a solid white image, grayscale beating can also be eliminated.

In some systems not part of the invention, a completely separate illumination system may be added to enable "flash" illumination of the capture scene, which is costly and complicated. In contrast, in one example herein, a software system including machine-readable instructions is used to create the camera flash mode that replaces the time sequential red, green, blue lighting sequence with a mode that turns each LED on at a 100% duty cycle, so that all three LEDs are projecting at the same time during the entire camera flash mode. In one example, the camera flash mode is defined and created in the firmware of the projector 16, which comprises machine-readable instructions, and is subsequently enabled by a functional call to the projector 16 requesting the camera flash mode. The functional call results in the normal sequential display signal being provided to the projector 16 to be interrupted, and replaced with a signal that causes the red, green, and blue LEDs to all project light at the same time. In one example, the camera flash mode lasts for a predetermined period of time, and then the projector 16 is to automatically return to a normal sequential display mode. In another example, a second functional call is made to the projector 16 to instruct the projector 16 to switch from the camera flash mode to the normal sequential display mode. During the camera flash mode, the camera 14 captures an image or multiple images (e.g., video), using the white light from the projector 16 as an illumination source. The length of the camera flash mode may vary based on whether a single frame is being captured or whether multiple frames are being captured. In one example, current to the LEDs is individually controlled to set the value of the brightness of each LED to achieve a true white point during the camera flash mode.

This method does not use a separate illumination system, and makes use of existing hardware to accomplish the functionality without adding cost, complexity, and size. The existing hardware is used as both a projected display device and also as a high powered camera flash device. The method works for a variety of different types of image sensors, including global shutter sensors and rolling shutter sensors. Since all of the LEDs are providing light at the same time in the camera flash mode, an overall brighter light is provided than during the normal sequential mode, which reduces the sensitivity of the system to any ambient light.

Due to large variation in LED brightness and dominant wavelength, there is not a single setting that will enable a consistent white point to be used for flash illumination. A consistent white point and high brightness for flash illumination helps to optimize image capture performance. One example is directed to a calibration method that optimizes the LED drive settings of projector 16 to achieve a consistent target white point and maximize the flash brightness without knowing characteristics of the LEDs of the projector 16. The method according to one example uses an external color meter 60 (Figure 3) to measure the brightness and white point of the flash mode, and continuously adjusts the LED drive settings of the projector 16 until the best solution is found (e.g., International Commission on Illumination (CIE) D65 white point).

In one example, the LED drive settings of the projector 16 comprise pulse width modulation (PWM) settings. The method according to one example quickly converges to the D65 white point (within a tolerance margin) by controlling the PWM settings for red, green, and blue LEDs of projector 16. The method according to one example uses a simulated annealing approach that is adapted to PWM control of LEDs.

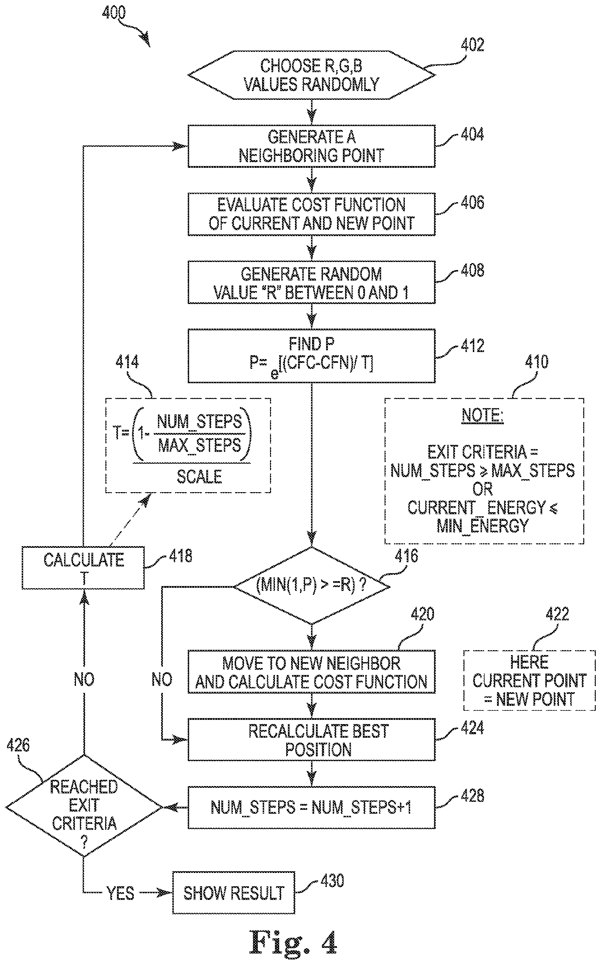

Figure 4 is a flow diagram illustrating a simulated annealing method 400 for generating a predetermined white point according to one example. At 402 in method 400, a current point (i.e., current R,G,B values) is randomly chosen. At 404, a neighboring point (i.e., new R,G,B values near the current R,G,B values) is generated. At 406, a cost function of the current point and the new (neighboring) point is evaluated. At 408, a random value, R, between 0 and 1, is generated. At 412, a value, P, is determined, where P is equal to Exp[(CFC-CFN)/T]; where CFC is the cost function for the current position, CFN is the cost function for the new position, and T represents temperature. At 416, it is determined whether the minimum of (1,P) is greater than or equal to the random value, R. If it is determined at 416 that the minimum of (1,P) is greater than or equal to the random value, R, the method 400 moves to 420. If it is determined at 416 that the minimum of (1 ,P) is not greater than or equal to the random value, R, the method 400 moves to 424..

At 420 in method 400, a new neighboring point is identified and its cost function is calculated. As indicated at 422, at this point in the method 400, the current point equals the new point. At 424, the best position (i.e., the best point or set of R,G,B values) is recalculated. At 428, the value, num_steps, which represents the current number of iterations, is incremented by one, and the method 400 moves to 426. At 426, it is determined whether the exit criteria has been reached. As indicated at 410, the exit criteria is whether the value, num_steps, is greater than or equal to max_steps (i.e., the maximum number of iterations) OR whether the value, current_energy, is less than or equal to the value, min_energy, where current_energy is the cost function of the current point, and min_energy is the minimum cost function for the exit criteria.

If it is determined at 426 that the exit criteria has been reached, the method 400 moves to 430, where results of the method 400 are shown and the method 400 ends. If it is determined at 426 that the exit criteria has not been reached, the method 400 moves to 418. At 418, the temperature, T, is calculated, and the method 400 returns to 404. As shown at 414, the value, T, is equal to (1-(num_steps / max_steps)) / scale.

Application of an annealing approach, such as that shown in Figure 4, to PWM control of LEDs will now be described in further detail with reference to a pseudo code example. There is a range of PWM values for each LED (e.g., 0-255). The International Commission on Illumination (CIE) x,y,Y color space is used in one example of the method. The D65 white point in this color scheme is at x = 0.31274 y = 0.32900 and Y = don't care. Definitions for some of the terms used in the method are provided below.

Cost function = First transform from RGB color space to xyY space and then determine the root mean square deviation from the desired value (x = 0.31274 y = 0.32900) in the xyY space.

Min_energy = Minimum cost function for exit criteria.

Max_Steps = Maximum number of iterations.

Num_steps = current number of iterations

Get_new_neighbor() = get new R,G,B value in the neighborhood of the current position. The neighborhood is chosen at random within a predefined boundary.

CFC = cost function for current position.

CFN = cost function for new position.

CFB = cost function for best position (best position is the nearest to the minimum energy that has been found).

R = Random number between 0 and 1.

[0040] T = (1 - num_steps/ max_Steps) / scale = Temperature of the system, which decreases with the number of iterations.

$$P = e^{((CFC-CFN)/T)}$$

CE = Current Energy of the system = Cost function of the current chosen point

An example method for calibrating the white point of a projection capture system using a simulated annealing approach is given in the following Pseudo Code Example I:

Pseudo Code Example I

Select R,G,B values at random or based on the knowledge of their brightness profiles.

```
while (num_steps < max_Steps and current_energy > min_energy)
    find_T()
    Get_new_neighbor()//New R,G,B but we haven't moved yet
    find_CFC()
    find_CFN()
    get_R()
    find_P()
    if(MIN(1.0,P) >= R)
    {
    Move_to_new_neighbor()
    Find_CE()
    }
    Find_BestPos()
} num_steps = num_steps + 1;
```

Show_Results() // Show the R,G,B value for the best and current Cost functions.
As shown in Example I, PWM values for R,G,B LEDs of projector 16 are selected. These values are used by projector 16 in projecting a flash of white light. Color meter 60 is used to measure the projected white light to generate x and y values in the x,y,Y color space. While the current number of iterations (num_steps) is less than the maximum number of iterations (max_Steps) and the current energy of the system (current_energy) is greater than the minimum energy (min_energy), the method in Example I goes through a number of steps. The first step is to find the current temperature of the system (find_T()). The current temperature, T, equals (1 - num_steps/ max_Steps) / scale, and decreases with the number of iterations. Next, the method performs a get_new_neighbor() function, which involves selecting new PWM values for R,G,B LEDs of projector 16 that are close to the current values, projecting a flash of white light using the new PWM values, and using the color meter 60 to measure the projected white light.
Next, a find_CFC() function is performed, which is the cost function for the current position or set of PWM values. Next, a find_CFN() function is performed, which is the cost function for the new position or new set of PWM values. Next, a get_R() function is performed to determine a random number, R, between 0 and 1. Next, a find_P() function is performed, where $P = e^{((CFC-CFN)/T)}$. Next, the method involves determining whether the minimum of 1.0 and the value, P, is greater than or equal the random number, R, and if it is, the method performs a Move_to_new_neighbor() function and a Find_CE() function. The Move_to_new_neighbor() function selects the new position or new set of PWM values as the current position, and the Find_CE() function involves determining the current energy of the system, which is a cost function of the current chosen position. Lastly, the method involves performing a Find_BestPos() function and incrementing num_steps. The Find_BestPos() function determines the position or set of PWM values that produces a projected white images that is closest to the D65 white point.

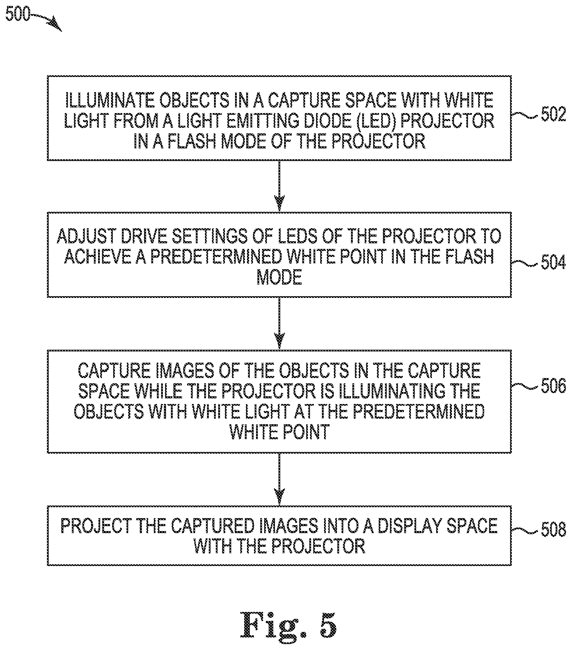

One example implementation is directed to a method for capturing and projecting images. Figure 5 is a flow diagram illustrating the method according to one example. At 502 in method 500, objects in a capture space are illuminated with white light from a light emitting diode (LED) projector in a flash mode of the projector. At 504, drive settings of LEDs of the projector are adjusted to achieve a predetermined white point in the flash mode. At 506, images of the objects in the capture space are captured while the projector is illuminating the objects with white light at the predetermined white point. At 508, the captured images are projected into a display space with the projector. In one example of method 500, the adjusting drive settings of the LEDs at 504 further includes determining a root mean square deviation of projected white light from a D65 white point in an International Commission on Illumination (CIE) xyY color space, and adjusting pulse width modulation drive settings of the LEDS to achieve the D65 white point.

Another example implementation is directed to a projection capture system that includes a camera to capture images of objects in a capture space, and a light emitting diode (LED) projector to illuminate the objects in the capture space and to project images captured by the camera into a display space. The projector includes a flash mode for providing white light for illuminating the objects in the capture space. The system includes a controller to adjust drive settings to LEDs of the projector to achieve a predetermined white point during the flash mode.

In one form of this example, the predetermined white point is an International Commission on Illumination (CIE) D65 white point. A color meter is used to generate color information based on projected white light during the flash mode, and the controller adjusts the drive settings of the LEDs based on the color information generated by the color meter. In one example, the drive settings of the LEDs comprise pulse width modulation (PWM) settings. The controller according to one example uses a simulated annealing method to achieve the predetermined white point, and the simulated annealing method uses an International Commission on Illumination (CIE) xyY color space. The simulated annealing method includes determining a root mean square deviation of projected white light from the predetermined white point in the xyY space. In one example, the projector includes a sequential display mode for sequentially displaying red, green, and blue LED light to project images captured by the camera into the display space, and the camera flash mode involves simultaneously displaying red, green, and blue LED light to provide the white light for illuminating the objects in the capture space. In one example, the display space overlaps the capture space. The projector according to one example is housed together with the camera. In one example, the camera is positioned above the projector and the system further includes a mirror positioned above the projector to reflect light from the projector down onto the display space.

Yet another example implementation is directed to a computer-readable storage media storing computer-executable instructions that when executed by at least one processor cause the at least one processor to perform a method. The method includes causing a light emitting diode (LED) projector to enter a flash mode to illuminate objects in a capture space with projected white light, and causing a color meter to measure the projected white light. The method includes adjusting pulse width modulation (PWM) drive settings of LEDs of the projector based on the measured projected white light to achieve a predetermined white point in the flash mode. The method further includes causing a camera to capture images of the objects in the capture space while the projector is in the flash mode, and causing the projector to switch to a display mode to project the captured images into a display space.

**Claims**

1. A projection capture system (10), comprising;
   a camera (14) to capture images of objects in a capture space; and
   a projector (16) to illuminate the objects in the capture space and to project images captured by the camera (14) into a display space, wherein the projector (16) includes a flash mode for projecting white light for illuminating the objects in the capture space; and
   a controller (18) to adjust drive settings to LEDs of the projector (16) to achieve a predetermined white point during the flash mode, **characterized by**
   a color meter (60) to generate color information based on the projected white light during the flash mode; wherein the controller (18) is to adjust the drive settings of the LEDs based on the color information generated by the color meter (60);
   wherein the controller (18) uses a simulated annealing method to achieve the predetermined white point.

2. The system (10) of claim 1, wherein the predetermined white point is an International Commission on Illumination (CIE) D65 white point.

3. The system (10) of claim 1, wherein the drive settings of the LEDs comprise pulse width modulation (PWM) settings.

4. The system (10) of claim 1, wherein the simulated annealing method uses an International Commission on Illumination (CIE) xyY color space.

5. The system (10) of claim 4, wherein the simulated annealing method includes determining a root mean square deviation of projected white light from the predetermined white point in the xyY space.

6. The system (10) of claim 1, wherein the projector (16) includes a sequential display mode for sequentially displaying red, green, and blue LED light to project images captured by the camera (14) into the display space, and wherein the camera (14) flash mode involves simultaneously displaying red, green, and blue LED light to provide the white light for illuminating the objects in the capture space.

7. The system (10) of claim 1, wherein the projector (16) is housed together with the camera (14).

8. The system (10) of claim 1, wherein the camera (14) is positioned above the projector (16) and wherein the system (10) further comprises a mirror positioned above the projector (16) to reflect light from the projector (16) down onto the display space.

9. A method for capturing and projecting images, comprising:

   illuminating objects in a capture space with white light from a light emitting diode (LED) projector (16) in a flash mode of the projector (16);
   measuring the projected white light with a color meter (60);
   adjusting drive settings of LEDs of the projector (16) based on the color information generated by the color meter (60) to achieve a predetermined white point in the flash mode using a simulated annealing method;
   capturing images of the objects in the capture space while the projector (16) is illuminating the objects with white light at the predetermined white point; and
   projecting the captured images into a display space with the projector (16).

10. The method of claim 9, wherein adjusting drive settings of the LEDs further comprises:
    determining a root mean square deviation of projected white light from a D65 white point in an International Commission on Illumination (CIE) xyY color space; and adjusting pulse width modulation drive settings of the LEDS to achieve the D65 white point.

11. A computer-readable storage media storing computer-executable instructions that when executed by at least one processor cause the at least one processor to perform a method, comprising:

    causing a light emitting diode (LED) projector (16) to enter a flash mode to illuminate objects in a capture space with projected white light;
    causing a color meter (60) to measure the projected white light;
    adjusting pulse width modulation (PWM) drive settings of LEDs of the projector (16) based on the measured projected white light to achieve a predetermined white point in the flash mode using a simulated annealing method;
    causing a camera (14) to capture images of the objects in the capture space while the projector (16) is in the flash mode; and
    causing the projector (16) to switch to a display mode to project the captured images into a display space.

12. The computer-readable storage media of claim 11, wherein the display space overlaps the capture space.

**Patentansprüche**

1. Projektionserfassungssystem (10), das Folgendes umfasst:

   eine Kamera (14), um Bilder von Objekten in einem Erfassungsraum zu erfassen; und
   einen Projektor (16), um die Objekte in dem Erfassungsraum zu beleuchten und von der Kamera (14) erfasste Bilder in einen Anzeigeraum zu projizieren, wobei der Projektor (16) einen Blitzmodus zum Projizieren von Weißlicht zum Beleuchten der Objekte in dem Erfassungsraum beinhaltet; und

eine Steuerung (18), um Ansteuerungseinstellungen an LEDs des Projektors (16) anzupassen, um einen zuvor bestimmten Weißpunkt während des Blitzmodus zu erreichen, **gekennzeichnet durch**

ein Farbmessgerät (60), um Farbinformationen auf der Basis des projizierten Weißlichts während des Blitzmodus zu erzeugen; wobei die Steuerung (18) die Ansteuerungseinstellungen der LEDs auf der Basis der Farbinformationen, die durch das Farbmessgerät (60) erzeugt werden, anpassen soll;

wobei die Steuerung (18) ein simuliertes Glühverfahren verwendet, um den zuvor bestimmten Weißpunkt zu erreichen.

2. System (10) nach Anspruch 1, wobei der zuvor bestimmte Weißpunkt ein D65 Weißpunkt der Internationalen Beleuchtungskommission (*Commission Internationale de l'Éclairage* - CIE) ist.

3. System (10) nach Anspruch 1, wobei die Ansteuerungseinstellungen der LEDs Einstellungen für die Pulsweitenmodulation (PWM) umfassen.

4. System (10) nach Anspruch 1, wobei das simulierte Glühverfahren einen xyY-Farbraum der Internationalen Beleuchtungskommission (CIE) verwendet.

5. System (10) nach Anspruch 4, wobei das simulierte Glühverfahren ein Bestimmen einer Standardabweichung des projizierten Weißlichts von dem zuvor bestimmten Weißpunkt in dem xyY-Raum umfasst.

6. System (10) nach Anspruch 1, wobei der Projektor (16) einen aufeinanderfolgenden Anzeigemodus zum aufeinanderfolgenden Anzeigen von rotem, grünem und blauem LED-Licht aufweist, um von der Kamera (14) erfasste Bilder in den Anzeigeraum zu projizieren, und wobei der Blitzmodus der Kamera (14) das gleichzeitige Anzeigen von rotem, grünem und blauem LED-Licht umfasst, um das Weißlicht zum Beleuchten der Objekte im Erfassungsraum bereitzustellen.

7. System (10) nach Anspruch 1, wobei der Projektor (16) zusammen mit der Kamera (14) untergebracht ist.

8. System (10) nach Anspruch 1, wobei die Kamera (14) über dem Projektor (16) positioniert ist und wobei das System (10) ferner einen Spiegel umfasst, der über dem Projektor (16) positioniert ist, um Licht von dem Projektor (16) nach unten auf den Anzeigeraum zu reflektieren.

9. Verfahren zum Erfassen und Projizieren von Bildern, das Folgendes umfasst:

Beleuchten von Objekten in einem Erfassungsraum mit Weißlicht von einem Leuchtdioden(*light emitting diode* - LED)-Projektor (16) in einem Blitzmodus des Projektors (16);

Messen des projizierten Weißlichts mit einem Farbmessgerät (60);

Anpassen der Ansteuerungseinstellungen der LEDs des Projektors (16) auf der Basis der Farbinformationen, die durch das Farbmessgerät (60) erzeugt werden, um einen zuvor bestimmten Weißpunkt in dem Blitzmodus unter Verwendung eines simulierten Glühverfahrens zu erreichen;

Erfassen von Bildern der Objekte in dem Erfassungsraum, während der Projektor (16) die Objekte mit Weißlicht an dem zuvor bestimmten Weißpunkt beleuchtet; und

Projizieren der erfassten Bilder mit dem Projektor (16) in einen Anzeigeraum.

10. Verfahren nach Anspruch 9, wobei das Anpassen der Ansteuerungseinstellungen der LEDs ferner Folgendes umfasst:

Bestimmen einer Standardabweichung des projizierten Weißlichts von einem D65-Weißpunkt in einem xyY-Farbraum der Internationalen Beleuchtungskommission (CIE); und

Anpassen der Pulsweitenmodulations-Ansteuerungseinstellungen der LEDS, um den D65-Weißpunkt zu erreichen.

11. Computerlesbares Speichermedium, das computerausführbare Befehle speichert, die, wenn sie durch mindestens einen Prozessor ausgeführt werden, bewirken, dass der mindestens eine Prozessor ein Verfahren ausführt, das Folgendes umfasst:

Bewirken, dass ein Leuchtdioden(*light emitting diode* - LED)-Projektor (16) in einen Blitzmodus übergeht, um Objekte in einem Erfassungsraum mit projiziertem Weißlicht zu beleuchten;

Bewirken, dass ein Farbmessgerät (60) das projizierte Weißlicht misst;

Anpassen der Pulsweitenmodulations(*pulse width modulation* - PWM)-Ansteuerungseinstellungen der LEDs des Projektors (16) auf der Basis des gemessenen projizierten Weißlichts, um einen vorbestimmten Weißpunkt in dem Blitzmodus unter Verwendung eines simulierten Glühverfahrens zu erreichen;

Bewirken, dass eine Kamera (14) Bilder der Objekte in dem Erfassungsraum erfasst, während sich der Projektor (16) in dem Blitzmodus befindet; und

Bewirken, dass der Projektor (16) in einen Anzeigemodus wechselt, um die erfassten Bilder in einen Anzeigeraum zu projizieren.

**12.** Computerlesbares Speichermedium nach Anspruch 11, wobei der Anzeigeraum den Erfassungsraum überlappt.


**Revendications**

**1.** Système de capture par projection (10), comprenant :

un appareil photo (14) pour capturer des images d'objets dans un espace de capture ; et

un projecteur (16) pour éclairer les objets dans l'espace de capture et pour projeter des images capturées par l'appareil photo (14) dans un espace d'affichage, le projecteur (16) comportant un mode flash pour projeter une lumière blanche afin d'éclairer les objets dans l'espace de capture ; et

un dispositif de commande (18) pour régler les paramètres d'attaque des DEL du projecteur (16) afin d'obtenir un point blanc prédéterminé pendant le mode flash, **caractérisé par**

un colorimètre (60) pour générer des informations de couleur en fonction de la lumière blanche projetée pendant le mode flash ;

le dispositif de commande (18) devant régler les paramètres d'attaque des DEL en fonction des informations de couleur générées par le colorimètre (60) ;

le dispositif de commande (18) utilisant un procédé de recuit simulé pour obtenir le point blanc prédéterminé.

**2.** Système (10) selon la revendication 1, dans lequel le point blanc prédéterminé est un point blanc D65 de la Commission internationale de l'éclairage (CIE).

**3.** Système (10) selon la revendication 1, dans lequel les paramètres d'attaque des DEL comprennent des paramètres de modulation de largeur d'impulsion (MLI).

**4.** Système (10) selon la revendication 1, dans lequel le procédé de recuit simulé utilise un espace colorimétrique xyY de la Commission internationale de l'éclairage (CIE).

**5.** Système (10) selon la revendication 4, dans lequel le procédé de recuit simulé comporte la détermination d'un écart-type de la lumière blanche projetée par rapport au point blanc prédéterminé dans l'espace xyY.

**6.** Système (10) selon la revendication 1, dans lequel le projecteur (16) comporte un mode d'affichage séquentiel pour afficher séquentiellement une lumière DEL rouge, verte et bleue afin de projeter des images capturées par l'appareil photo (14) dans l'espace d'affichage, et dans lequel le mode flash de l'appareil photo (14) implique l'affichage simultané d'une lumière DEL rouge, verte et bleue pour fournir la lumière blanche permettant d'éclairer les objets dans l'espace de capture.

**7.** Système (10) selon la revendication 1, dans lequel le projecteur (16) est logé avec l'appareil photo (14).

**8.** Système (10) selon la revendication 1, dans lequel l'appareil photo (14) est positionné au-dessus du projecteur (16) et dans lequel le système (10) comprend en outre un miroir positionné au-dessus du projecteur (16) pour réfléchir la lumière du projecteur (16) sur l'espace d'affichage.

**9.** Procédé de capture et de projection d'images, comprenant :

l'éclairage d'objets dans un espace de capture avec de la lumière blanche provenant d'un projecteur (16) à diode électroluminescente (DEL) dans un mode flash du projecteur (16) ;

la mesure de la lumière blanche projetée à l'aide d'un colorimètre (60) ;

le réglage des paramètres d'attaque des DEL du projecteur (16) en fonction des informations de couleur générées par le colorimètre (60) pour obtenir un point blanc prédéterminé en mode flash à l'aide d'un procédé de recuit simulé ;

la capture d'images des objets dans l'espace de capture pendant que le projecteur (16) éclaire les objets avec de la lumière blanche au niveau du point blanc prédéterminé ; et

la projection des images capturées dans un espace d'affichage à l'aide du projecteur (16).

10. Procédé selon la revendication 9, dans lequel le réglage des paramètres d'attaque des DEL comprend en outre :

la détermination d'un écart-type de la lumière blanche projetée à partir d'un point blanc D65 dans un espace colorimétrique xyY de la Commission internationale de l'éclairage (CIE) ; et

le réglage des paramètres d'attaque de la modulation de largeur d'impulsion des DEL pour obtenir le point blanc D65.

11. Support de stockage lisible par ordinateur stockant des instructions exécutables par ordinateur qui, lorsqu'elles sont exécutées par au moins un processeur, amènent l'au moins un processeur à effectuer un procédé, comprenant :

le fait d'amener un projecteur à diode électroluminescente (DEL) (16) à entrer dans un mode flash pour éclairer des objets dans un espace de capture avec une lumière blanche projetée ;

le fait d'amener un colorimètre (60) à mesurer la lumière blanche projetée ;

le réglage des paramètres d'attaque de modulation de largeur d'impulsion (MLI) des DEL du projecteur (16) en fonction des informations de couleur générées par le colorimètre pour obtenir un point blanc prédéterminé en mode flash à l'aide d'un procédé de recuit simulé ;

le fait d'amener un appareil photo (14) à capturer des images des objets dans l'espace de capture pendant que le projecteur (16) est en mode flash ; et

le fait d'amener le projecteur (16) à commuter vers un mode d'affichage pour projeter les images capturées dans un espace d'affichage.

12. Support de stockage lisible par ordinateur selon la revendication 11, dans lequel l'espace d'affichage chevauche l'espace de capture.

**Fig. 1A**

**Fig. 1B**

**Fig. 2**

**Fig. 3**

400

402 CHOOSE R,G,B
VALUES RANDOMLY

404 GENERATE A
NEIGHBORING POINT

406 EVALUATE COST FUNCTION
OF CURRENT AND NEW POINT

408 GENERATE RANDOM
VALUE "R" BETWEEN 0 AND 1

412 FIND P
$P = e^{[(CFC-CFN)/T]}$

414 $T = \dfrac{\left(1 - \dfrac{NUM\_STEPS}{MAX\_STEPS}\right)}{SCALE}$

410 NOTE:

EXIT CRITERIA =
NUM_STEPS ≥ MAX_STEPS
OR
CURRENT_ENERGY ≤
MIN_ENERGY

418 CALCULATE T

416 (MIN(1,P) > =R) ?

420 MOVE TO NEW NEIGHBOR
AND CALCULATE COST FUNCTION

422 HERE
CURRENT POINT
= NEW POINT

NO

NO

424 RECALCULATE BEST
POSITION

426 REACHED
EXIT
CRITERIA
?

428 NUM_STEPS = NUM_STEPS+1

YES → SHOW RESULT 430

Fig. 4

500

ILLUMINATE OBJECTS IN A CAPTURE SPACE WITH WHITE LIGHT FROM A LIGHT EMITTING DIODE (LED) PROJECTOR IN A FLASH MODE OF THE PROJECTOR ⌐502

ADJUST DRIVE SETTINGS OF LEDS OF THE PROJECTOR TO ACHIEVE A PREDETERMINED WHITE POINT IN THE FLASH MODE ⌐504

CAPTURE IMAGES OF THE OBJECTS IN THE CAPTURE SPACE WHILE THE PROJECTOR IS ILLUMINATING THE OBJECTS WITH WHITE LIGHT AT THE PREDETERMINED WHITE POINT ⌐506

PROJECT THE CAPTURED IMAGES INTO A DISPLAY SPACE WITH THE PROJECTOR ⌐508

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013019255 A
- US 20120320157 A
- WO 2009074938 A
- US 20100097406 A
- GB 2482562 A